# EUROPEAN PATENT APPLICATION

(11) **EP 3 852 501 A1**
(43) Date of publication of application: **21.07.2021**
(21) Application number: 20152698.5
(22) Date of filing: 20.01.2020
(51) Int. Cl.: H05B 47/155, H05B 47/16, H05B 47/19

(54) **METHOD FOR OUTPUTTING SYNCHRONIZED LIGHT SIGNALS**

(71) Applicant: Emami, Arman, 10405 Berlin (DE)
(72) Inventor: Emami, Arman, 10405 Berlin (DE)
(74) Representative: Gulde & Partner

(57) **Abstract**

The present invention refers to a method for outputting synchronized light signals by a plurality of mobile terminals (10). Therein, each mobile terminal (10) comprises at least one light source (14, 17) and a control unit (40) configured to control the at least one light source (14,17). The method of the present invention comprises at least the steps of: receiving, by each of the mobile terminals (10), a synchronization signal configured for aligning a timescale across the mobile terminals (10); loading, by each of the mobile terminals (10), pattern information setting at least one rule for generating a time dependent signal sequence; determining, by each of the mobile terminals (10), a time dependent signal sequence based on the pattern information and the synchronization signal; and outputting, by the plurality of mobile terminals (10), synchronized light signals based on the time dependent signal sequence. The present invention further refers to a mobile terminal (10) as well as to a computer program for performing the method of the present invention.

## Description

### Field of the Invention

The present disclosure relates to a method for outputting synchronized light signals, particularly to a method for outputting synchronized light signals by a plurality of mobile terminals such as e.g., smartphone, tablets, wearables, or the like. The present disclosure further relates to a mobile terminal and a computer program for performing the method.

### Technological Background

Mobile devices are present everywhere in modern life and nowadays almost everybody carries a mobile device for most of the time. Further, by providing more and more functionalities, mobile device take over the places of more and more individual devices that were previously used for special purposes, such as e.g., cameras, MP3 players, and the like. Also recently, smart lighting utilities have been introduced to many user's homes providing different lighting settings, e.g., different colors etc., that can be remotely controlled. However, these lighting utilities are usually designed to retro-fit common lamp sockets e.g. as a bulb.

Although mobile terminals usually comprise at least one or even multiple light sources themselves, until now these light sources are often only exploited as a camera flash or torch. Hence, hardware lighting resources that are present at almost all times in the life of many users are not efficiently used to realize improved lighting functionalities but instead separate lighting devices are used, leading to an inefficient usage of energy and resources.

It is thus an object of the present invention to overcome or reduce at least some of the drawbacks of the prior art and to provide a method for utilizing the light sources of mobile terminals in an improved manner, particularly to provide concerted and swarm-like lighting.

### Description of Invention

According to an aspect of the present disclosure, a method for outputting synchronized light signals by a plurality of mobile terminals is provided. In other words, the method of the present disclosure is performed by the plurality of mobile terminals, i.e., each of the mobile terminals performs at least some of the steps of the method, while other steps are performed by all of the mobile terminals. In the context of the present disclosure, each of the mobile terminals comprises at least one light source, such as e.g., a display and/or a camera flash light, and a control unit that is configured for controlling the at least one light source. Preferably, the at least one mobile terminal is a smartphone, a tablet or a wearable device.

In the method of the present disclosure, each of the mobile terminals receives a synchronization signal that configured for aligning a timescale across the mobile terminals. Therein, the synchronization signal is received individually by each of the mobile terminals, wherein different mobile terminals may receive the synchronization signals via different transmission pathways. The synchronization signal defines a temporal reference system. Particularly preferred, each of the mobile terminals receives the same synchronization signal or at least receives a synchronization signal with the same content, e.g., referring to a standard time of a geographical region, a technical system, a venue, or the like.

Further, each of the mobile terminals loads pattern information, e.g., into a random access memory or another kind of working memory. Therein, the pattern information sets at least one rule for generating a time dependent signal sequence, particularly a time dependent signal sequence with respect to the at least one light source. Preferably, at least one rule is a static rule, i.e., defines a time dependent signal sequence independent of any input or variable. Further preferred, at least one rule is a conditional rule, i.e., defines a time dependent signal sequence in dependence of at least one input variable. In other words, depending on a varying input variable, the rule generates a varying time dependent signal sequence. After loading the pattern information, each of the mobile terminals is configured to determine a time dependent time sequence according to the rule(s) set in the pattern information. Particularly preferred, each of the mobile terminals loads the same, i.e., identical, pattern information.

In the context of the present disclosure, a time dependent signal sequence is a sequence of values, wherein each value is unambiguously assigned to one time point. In a preferred embodiment, the assigned values are either "0" or "1" (or can be normalized to "0" and "1"), wherein "0" preferably refers to an inactivated state of a light source and "1" preferably refers to an activated state of a light source. Further preferred, the assigned values can further take any or at least some values between "0" and "1" (or can be normalized to such values), wherein the values between "0" and "1" refer to activated states of the light source with different brightness and/or color. Preferably, at least some of the values of the time dependent signal sequence differ from each other in value. In an illustrative example, the time dependent signal sequence may comprise values "0" and "1" with fixed duty cycle. Exemplarily, the value "1" may have a duty cycle of 50% and in total, the duration of values "0" equals the duration of values "1", wherein the period duration may be fixed. In other words, blinking of the light source can be realized with such time dependent signal sequence.

In the method of the present disclosure, each of the mobile terminals further determines a time dependent signal sequence based on the pattern information and based on the synchronization signal. That is, each of the mobile terminals uses the loaded pattern information for determining the time dependent signal sequence, wherein each of the terminals considers the received synchronization signal in order to temporarily align the signal sequence. Preferably, as each of the mobile terminals uses a synchronization signal of same content and further uses identical pattern information for generating a time dependent signal sequence, each of the terminals determines the same time dependent signal sequence.

Finally, in the method of the present disclosure, the plurality of mobile terminals outputs synchronized light signals based on the time dependent signal sequence. In other words, each of the mobile terminals outputs a light signal, wherein the light signals of the plurality of mobile terminals are aligned with respect to each other. In the context of the present disclosure, synchronization refers to either a simultaneousness of the light signals or to a fixed temporal relationship between the outputted light signals. In other words, not all light signals must be outputted at the same time. However, a time lag between the output times of signals of different mobile terminals of the plurality of mobile terminals is never arbitrary.

Hence, the method of the present disclosure advantageously allows for generating complex light signal sequences output by a plurality of mobile terminals. This allows for generating light signal sequences of increased luminous intensity that can be used for multiple purposes including communication, (decorative) illumination and/or entertainment. As the light signal outputs of the plurality of mobile terminals are synchronized, the intensity of the light outputs of the individual mobile terminals can be reduced, thus leading to less energy consumption per individual mobile terminal hence increasing the battery life of the mobile terminals. Also in total, by setting a time dependent signal sequence, e.g., blinking, for all of the mobile terminals, energy consumption can be further reduced, e.g., compared to continuous lighting.

Finally, by synchronizing the light signals advanced lighting effects can be generated for large pluralities of mobile terminals resulting in improved aesthetical effects. However, the method of the present disclosure does not relate to the particular form of the synchronized light signal, i.e., not to the particularly achieved aesthetic effect, but rather to the technical implementation for setting the prerequisites for realizing such improved aesthetical effects.

In other words, the method of the present disclosure allows providing a more creative and efficient solution for utilizing the light sources of a mobile terminal, particularly preferred the flash light of the mobile terminal, for generating complex patterns and sequences of light. These pattern and sequences can even form animated pictures and thus allow generating a feeling of community and good spirit among the participants of a peaceful demonstration, a sport event, a concert or any other event having many participants or visitors. The at least one light source may be one of a display and a camera flash of the mobile terminal. However, in the method of the present disclosure a display shall only be used only as light source, e.g., by preferably showing a uniformly colored illuminated screen, and is not used as display. Particularly preferred, a camera flash of a mobile terminal is used as the light source.

In a preferred embodiment, the pattern information sets at least one (conditional) rule for generating a time dependent signal sequence based on detected sensor data. In other words, the detected sensor data functions as input for the rule that generates a varying time dependent signal sequence based on varying detected sensor data. Further, according to this embodiment, the time dependent signal sequence is determined based on the pattern information, i.e., the conditional rule of the pattern information, the sensor data detected by at least one terminal and the synchronization signal. This embodiment advantageously allows to define a time dependent signal sequence and thus the synchronized light signals on external signals, such as e.g., an environmental sound or music and/or on collective movements.

Particularly preferred, the detected sensor data relates to an acoustic signal and the pattern information sets at least one rule for generating a signal sequence based on the acoustic signal. In such an embodiment, the determined time dependent signal sequence (and thus the synchronized light signals) can be further based on an acoustic signal detected by the plurality of mobile terminals. This embodiment advantageously allows generating advanced illumination effects in public concerts, clubs, during radio transmissions, public viewing or the like. Therein, the plurality of mobile terminals advantageously acts as a common "light organ". Therein, both amplitude and frequency of the acoustic signal may be converted to amplitude and/or to frequency of the signals of the generated time dependent signal sequence.

Further preferred, the detected sensor data relates to an optical signal and the pattern information sets at least one rule for generating a signal sequence based on the optical signal. In such an embodiment, the determined time dependent signal sequence (and thus the synchronized light signals) can be further based on an optical signal detected by the plurality of mobile terminals. This embodiment advantageously allows generating advanced responsive light effects in public events. Exemplarily, a guiding signal is transmitted from a stage of a concert or the like and detected by each of the mobile terminals and, in response, each of the plurality of terminals outputs a synchronized light signal. Therein, both amplitude and frequency of the optical signal may be converted to amplitude and/or to frequency of the signals of the generated time dependent signal sequence.

Also preferred, the detected sensor data relates to a motion of at least one mobile terminal and the pattern information sets at least one rule for generating a signal sequence based on the detected motion. Therein, the motion is preferably detected based on acceleration measurements, e.g., by a gyroscope sensor or the like. This embodiment is particularly suitable for generating synchronized light signals based on coordinated movements of the plurality of mobile terminals, respective their users. Hence, this embodiment allows further enhancing effects based on collective motion, such as e.g., Mexican waves ("La-Ola waves") or collectively waving arms to the rhythm of music at a concert or the like. In case of unsynchronized movement, a motion detected by one mobile terminal may be used for generating synchronized light that, when outputted, can be then used for synchronization.

In a further preferred embodiment, a conditional rule for generating the time dependent signal sequence receives information associated with the individual mobile terminal of the plurality of terminals as input variable. Exemplarily, a last digit of a SIM, IMEI or MAC identifier of the mobile terminal is used to determine a time offset of a time dependent signal sequence. As a result, all mobile terminals with an even last digit may simultaneously output synchronized light signals and all mobile terminals with an uneven last digit commonly output time-shifted light signals. Further, preferred the input variable of a conditional rule for generating the time dependent signal sequence is determined based on a user input, e.g., based on a user selection from a list of possible input variables (e.g., periodic duration, frequency, etc.).

However, also static rules for generating a time dependent signal sequence can be advantageously used in the method of the present disclosure. As set forth above, such static rules are independent from any input variable and thus the time dependent signal sequence is determined according to a predefined rule and based on the synchronization signal. Exemplarily, a static rule may generate a time dependent signal sequence for blinking, e.g., a sequence constant periodic duration and a duty cycle of about 50% and such time dependent signal sequence may be synchronized among the mobile terminals, such that all of the terminals blink at the same time and with the same frequency. Further, next to the frequency of the light signals also the amplitude of the light signals may be set in synchronized manner. Hence, instead of blinking also pulsing synchronized light signals may be outputted.

In a particularly preferred embodiment of the method of the present disclosure, the pattern information is prestored in a memory of at least one of the mobile terminals with respect to an application. Particularly preferred, the application is designed for generating and outputting synchronized light signals by a plurality of mobile terminals and the pattern information form part of the stored data associated with the application. Further preferred, the application provides a graphical user interface for selecting one of the prestored pattern information. Hence, the one of the pattern information is preferably loaded based on a user input. Therein, the prestored pattern information may be one of the pattern information as described above, e.g. pattern information that comprises (sets) at least one rule for generating a signal sequence based on an acoustic signal detected by the mobile terminal. Such pattern information may be selected based on a user input selecting a "light organ" function or the like. Alternatively, the prestored and/or selected (by a user input) pattern information may be pattern information that comprises (sets) at least one rule for generating a signal sequence based on an acoustic signal or based on a motion of at least one mobile terminal. Further, the application may enable the user selection of various pattern information setting static rules.

According to this preferred embodiment, a user preferably opens the app when an outputting of synchronized light signals is desired, e.g., during a concert. When the application is opened, it determines the synchronization signal and a (user) input for setting the pattern information. Exemplarily, the user selects pattern information for setting a rule for generating the time dependent signal sequence based on a detected audio signal, i.e., the music at the concert. Alternatively, the user selects pattern information for setting a rule for generating the time dependent signal sequence based on a detected motion, e.g., of waving arms in the rhythm of the music. The application then determines a time dependent signal sequence based on the pattern information and sensor data and outputs a synchronized light signal.

In an alternatively preferred embodiment, the pattern information is loaded via a network by at least one of the mobile terminals based on identification information detected by the at least one of the mobile terminals. The network is preferably a wireless communication network such as e.g., a 4G, 5G or WLAN network. The download of the pattern information as well as the detection of the identification information may again be embedded in the application. The identification information is preferably detected by a mobile terminal based on a barcode or a QR code that can be scanned by the mobile terminal. By that the identification information can be advantageously detected by a plurality of mobile terminals independent of each other. Further preferred, the pattern information that is loaded via a network preferably comprises a plurality of rules for generating the time dependent signal sequence or a rule for generating a highly complex time dependent signal sequence as described below with respect to groups.

In a particularly preferred embodiment, the pattern information loaded via a network is loaded from a server (e.g., operated by the distributor and/or operator of the previously mentioned application). Further preferred, based on a QR code scanned via a camera of a mobile terminal, a user can download pattern information comprising a rule for generating a time dependent signal sequence that is adapted to a specific environment and/or scenario.

Exemplarily, a QR code may be positioned in a sport stadium and, in response to scanning the QR code, a mobile terminal downloads pattern information. The pattern information comprises a rule for generating the time dependent signal sequence and the rule comprises the instruction to start a light signal when an anthem of the sport team or the stadium is started. Further, the rule may generate time dependent signal sequence that is adapted to the course of the anthem such that the output synchronized light signal is perfectly fitted to the anthem. In another example, a QR code may be positioned in a concert venue and scanned by attendees of the concert. In response to scanning the QR code, the mobile terminal downloads pattern information with a rule that instruct the terminals to initiate a specific light signal in response to a certain activation signal such as e.g., a specific tone or word or light signal. During the concert, the attendees are then asked to hold their mobile terminals in the air and then the activation signal is given resulting in an advanced lighting effect in the venue.

In another preferred embodiment, the pattern information is received by at least one of the mobile terminals via a message, particularly a push message, transmitted from at least one mobile terminal, particularly another mobile terminal of the plurality of mobile terminals. According to this embodiment, the mobile terminals preferably share the pattern information among each other, e.g., based on the detection of a proximate mobile terminal also having said application running. Then, by sharing the pattern information, which might have been downloaded by at least one mobile terminal based on a scanned code, among the other mobile terminals, the synchronization of the output light signals is further improved. In order to increase the distribution of the pattern information it is preferably transmitted (broadcasted) via a push message, i.e., without a previous request of the recipient mobile terminal.

Further preferred, the pattern information is preferably transmitted to at least one, preferably at least some, of the mobile terminals via a push message from a server, e.g., a server running said application. Particularly preferred, the push message is triggered based on a data exchange between a mobile terminal and the server, e.g., based on position information transmitted from the mobile terminal to the server. In other words, an operator of said application may determine whether or not a mobile terminal is at or near a specific region and then transmit pattern information that are fitted to that region, e.g., to an event in this region.

Also preferred, the pattern information are transmitted, particularly preferred broadcasted, by a beacon, e.g., a Bluetooth or WLAN beacon, that itself is positioned in that region. Hence, due to a limited transmission range of such beacon the pattern information is automatically transmitted selectively to mobile terminals that are present within that region. The same holds true, if the pattern information are transmitted from a central controller, wherein a central controller is preferably associated with a region, such as e.g., a stadium, a venue or the like. The central controller may transmit the pattern information to mobile terminals present in the region (stadium, venue) via at least one access point of a wireless communication network.

In the method of the present disclosure, the synchronization signal preferably is a synchronization (timing) signal of a mobile communication network. Such synchronization signals are commonly transmitted in communication networks in order to allow for flawless operation of the network, e.g., by scheduling uplink or downlink transmission between a base station and a plurality of mobile terminals. Hence, such synchronization signals are advantageously present in all mobile terminals connected to the mobile communication network and can thus be used in the method of the disclosure without any additional effort.

Additionally or alternatively, a timing signal of a GPS system can be used as the synchronization signal in the method. Advantageously, this allows even mobile terminals that are not connected to a mobile communication network to participate in the method of the present disclosure. Also preferred, the synchronization signal preferably is a synchronized light signal transmitted by at least one other mobile terminal, preferably by a plurality of other mobile terminals. Hence, even a mobile terminal without connection to a mobile communication network or GPS can participate in the method of the disclosure by aligning its time dependent signal sequence to the already outputted synchronized light signals.

Further preferred, the synchronization signal may be shared between the mobile terminals. That is, at least one of the mobile terminals receives the synchronization signal as described above, e.g., based on a timing signal of a GPS system or a mobile communication network. Then, the at least one mobile terminal transmits, preferably broadcasts, the received synchronization signal, e.g., via radio, Bluetooth or infrared transmission. Then, at least one other mobile terminal can receive the synchronization signal, e.g., via its antennas, image sensors and participate in the method.

Particularly preferred, in the method of the present disclosure a starting time point for the synchronized light signals is determined based on the synchronization signal. In other words, the starting point may be determined with respect to the synchronization signal, e.g., at the first full second after the detection of an external signal, e.g., a stadium anthem. Further preferred, the starting point may be determined based solely on the synchronization signal, e.g., for a countdown starting at 23:59:50 at December 31^{st}. Additionally or alternatively, at least one alignment time point, preferably a plurality of alignment time points, are determined based on the synchronization signal. Due to different hardware constraints, time offsets may form between the light signals output by different mobile terminals during the operation of the method. Such time offsets can be avoided and/or compensated by using alignment time points, at which the time dependent signal sequences of all mobile terminals should have the same value. Exemplarily, such alignment time points are defined as periodic time windows subsequent to the starting point and defined with reference to the synchronization signal. Such alignment time points advantageously also allow that a mobile terminal joining a plurality of mobile terminals that is already outputting synchronized light signals to synchronize with this plurality of mobile terminals. In other words, the joining mobile terminal can start to also output synchronized light signals from the alignment time point on.

In a particularly preferred embodiment, the method of the present disclosure further comprises the step of grouping the plurality of terminals. While the plurality of terminals outputting the synchronized light signals in the method of the disclosure form a group *per se*, an access to that group is only determined by whether the same patter information is loaded and the same synchronization signal is received. However, situations may occur where forming a group of terminals based on further conditions may be advantageous. Preferably, the grouping of the plurality of terminals or of a subset of the plurality of terminals is performed based on a user input, e.g., based on a user intention to form a group. Exemplarily, said application may provide a function for forming a group, wherein a user can initiate that function as group admin and may then invite further group members. Hence, an access to the group may be limited based on a user input, e.g., to a circle of friends etc.

Further preferred, the grouping of a plurality of mobile terminals is based on a location of the terminals. Therein, the location can be determined as a GPS coordinate or a predefined area around a certain GPS coordinate. However, a location may also be determined as an access point ID, e.g., as an identifier of a base station to which all of the grouped mobile terminals are connected. In other words, a grouping of mobile terminals is limited to mobile terminals that are within a common region. Hence, the grouping of the plurality of mobile terminals may also be based on that a proximity, i.e., a distance, between the mobile terminals is below a predetermined threshold. Therein, the distance may be determined based on signal strength.

This particularly preferred embodiment further comprises the step that group identification information are determined for the grouped plurality of terminals or the grouped subset of the plurality of terminals. Therein, the group identification information may be received from a server, e.g., a server running said application, or the group identification information may be generated from a mobile terminal itself, e.g., by a mobile terminal of a user that founded a group as an admin by a corresponding user input to said application. Further, according to this embodiment, the synchronization signal is received based on the group identification information, e.g., in that a synchronization signal particularly configured for the group is used. Further, the pattern information is loaded based on the group identification information, e.g., in that a synchronization signal particularly configured for the group is used. By adapting the synchronization information and/or the pattern information to the group identification information particularly advantageous effects can be achieved as described in the following.

Particularly preferred, the group identification information comprises a group ID identifying the grouped plurality of mobile terminals. In other words, the group identification information is preferably suitable to unambiguously distinguish one group from another group. Further preferred, the group identification information comprises a group member ID and a group member position for each of the grouped plurality of mobile terminals. In other words, next to identifying the group, the group identification information may further allow to identify the members of the group and hence the amount and preferably a type of grouped mobile terminals. Further, in the context of the present disclosure the group member position is identifying a relative position of each of the grouped plurality of mobile terminals with respect to the other mobile terminals of the grouped plurality of terminals. Particularly, the group member position identifies the relative position of one of the grouped mobile terminals with respect to all of the other mobile terminals of the group. However, the group member position may also identify a relative position only with respect to some, e.g., adjacent ones, of the plurality of grouped mobile terminal. In such embodiment, the entirety of the group member positions preferably identifies the relative positions of all of the grouped mobile terminals.

In the above embodiment, the group member position is preferably determined based on geographic position information for each of the grouped mobile terminals. Particularly preferred, this geographic position information has resolution in the range of 1 meter or even in the sub-meter range. Such geographic information are preferably determined based on assisted GPS, A-GPS, i.e., the combination of GPS information with location information from a mobile communication network, e.g., determined based on triangulation from different access points (base stations). Alternatively preferred, the group member positions are determined by WLAN triangulation, which is particularly advantageous in a venue having a WLAN with multiple access points. Then, different access points of the same WLAN can be used for triangulation. Also preferred, the geographic information for group member position information is determined by beam sweeping. Modern mobile terminals often comprise antenna that are suitable and configured to perform beamforming, e.g., for connection to a 5G MIMO communication system. Such antennas (transponder) allow determining a direction of signal reception and/or transmission with high precision, thus allowing to determine relative positioning of mobile terminals based on communication between the mobile terminals.

In a further preferred embodiment, the group member position for each of the grouped plurality of terminals is determined via a light-based communication between the mobile terminals of the grouped plurality of mobile terminals. Preferably, such light-based communication is performed under control of a central controller. In a surrounding structure, such central controller preferably can access a model, e.g., a 3D model of the surroundings structure. The light-based communication is preferably based on signal transmission via the at least one light source of one mobile terminal that is received via an image sensor of at least one other mobile terminal. Such communication is preferably performed in a calibration phase and/or under the control of said application. Exemplarily, in a venue or sport stadium, users of said app (that might have loaded pattern information already based on a scanned QR code) may be asked, e.g., by a push notification, to start a calibration by holding their mobile terminal up in the air and/or by performing a certain movement, e.g., swiveling, of the mobile terminal. Said application may then control the at least one light source, e.g., a camera flash, to transmit information via light-based communication, and at the same time control an image sensor, e.g., of a camera, to detect information transmitted by other mobile terminals via light-based communication. The transmitted information may comprise the group member ID and an absolute position of the group member, e.g., determined via A-GPS, and may thus allow the grouped plurality of mobile terminals to determine the relative positioning of all mobile terminals in a swarm-based manner. However, the light-based communication may also be controlled by a central controller and may e.g., be used to sequentially transmit identification information assigned by the central controller to a certain mobile terminal by that mobile terminal. Other mobile terminals that receive that assigned identification information transmit a notification to the central controller that they received the assigned identification information together with their own group member ID. By that, the central controller gets aware of the relative positioning of the mobile terminals among each other and can form a grid (mesh) of all of the grouped plurality of mobile terminals.

In another preferred embodiment, the group member position for each of the grouped plurality of terminals is determined based on a user input associated with a position of the user in a surrounding structure. Exemplarily, the method of the present disclosure is performed in a venue or stadium having a plurality of seat, each with a specific seat number. In such case, users of said application (that might have loaded pattern information already based on a scanned QR code) may be asked, e.g., by a push notification, to input their seat number. Based on the seat number and a predefined model of the surrounding structure, e.g., a 3D model of a stadium or a venue including a seating plan, then the relative positioning of the mobile terminals can be determined. Preferably, each of the mobile terminals submits their seat number to a central controller or server, which then determines said grid (mesh).

Also preferred, the group member position for each of the grouped plurality of terminals is determined based on at least one image of a surrounding structure obtained by each of the plurality of grouped terminals. This embodiment is again based on a priori information on the surrounding structure, e.g., a 3D model of a sport stadium or a venue. In such case, users of said application (that might have loaded pattern information already based on a scanned QR code) may be asked, e.g., by a push notification, to take a picture of a predefined structure in the sport stadium or venue, such as e.g., a soccer goal, a specific element of a stage, or the like. Therein, preferably the camera settings, such as e.g., zoom, focal width, etc., are either controlled by said application or recorded together with the taken image. Based on such image, the 3D model of the venue or stadium, and the camera settings, the relative positioning of the mobile terminals with respect to the predefined structure and thus with respect to each other can be determined. Preferably, the processing of this information is performed on a central controller or on a server comprising sufficient CPU capacities.

The grouping of the plurality of mobile terminals advantageously allow to restrict an access to the group to mobile terminals that have a group member ID associated with the group. Above that the grouping of the mobile terminals, wherein the group identification information comprises group member IDs and group member positions, advantageously allows to generate and output highly complex lighting patterns. In a preferred embodiment, the time dependent signal sequence generated by each of the plurality of grouped mobile terminals is based on the pattern information, on the synchronization signal and on the group member ID and/or the group member position of the mobile terminal. Further preferred, the time dependent signal sequence generated by each of the plurality of grouped mobile terminals is based on the pattern information, on the synchronization signal and on the group member ID and the group member position of the mobile terminal. Further, the synchronized light signals outputted by the plurality of grouped terminals preferably form a spatial pattern and/or a temporal sequence of light signals, such as letterings, logos, animations, and/or pictures. These spatial pattern and/or a temporal sequence of synchronized light signals output by the plurality of terminals can be advantageously used for commercial purposes such as advertising, e.g., in sport stadiums and/or for showing graphic anthems, e.g., of a sport club.

Another aspect of the present disclosure relates to a mobile terminal comprising at least one light source configured to output a visible light signal and further comprising a control unit that is configured for controlling the at least one light source and that is further configured for performing the method for outputting synchronized light signals according to the present disclosure as described above. The mobile terminal preferably is a smartphone or a tablet. Further preferred, the mobile terminal is a wearable device, such as e.g., a wrist watch. The at least one light source may be one of a display and a camera flash of the mobile terminal. However, in the method of the present disclosure a display shall only be used only as light source, e.g., by preferably showing a uniformly colored illuminated screen, and is not used as display. Particularly preferred, a camera flash of a mobile terminal is used as the light source.

Preferably, the mobile terminal of the present disclosure further comprises at least one sensor that is configured for detecting sensor data under the control of the control unit and that is configured for transmitting the detected sensor data to the control unit. The control unit can then perform the embodiments of the present invention, wherein the pattern information set at least one rule for generating a time dependent signal sequence based on sensor data. Particularly preferred, the at least one sensor of the mobile terminal comprises an image sensor, e.g., an image sensor of a camera, and/or an acoustic sensor, e.g., a microphone. Further preferred, the at least one sensor comprises an acceleration sensor and/or a gyroscope sensor of the mobile terminal and/or any other sensor suitable for detecting a movement and/or orientation of the mobile terminal in a spatial reference system. Modern mobile terminals comprise such sensors that can be all utilized in a method of the disclosure.

Further preferred, the mobile terminal of the present disclosure comprises a communication module that is configured for transmitting and receiving messages. Therein, the transmitted and/or received messages may comprise pattern information and/or synchronization information. Particularly preferred, the communication module is connected to at least one transponder, e.g., a transponder configured for transceiving radiofrequency signals, exemplarily according to 4G or 5G standards. Further preferred, the at least one transponder is configured for transceiving signals based on Bluetooth, WLAN, ZigBee, or the like. Further preferred, the mobile terminal comprises a plurality of transponders that are configured for performing beamforming and/or beam sweeping, e.g., for detecting a direction along which a signal is received. Also preferred, the communication module is connected to the at least one light source of the mobile terminal as well as to an image sensor of the mobile terminal and configured to perform light-based communication. In other words, light signals output by the mobile terminal can be used for transmitting information, either by the signal sequence of the light signals themselves or by signals modulated on the light signals, e.g., as an overtone.

Another aspect of the present disclosure relates to a computer program comprising instructions which, when the program is executed by a computer, preferably by a control unit of a mobile terminal as described above, cause the computer, preferably the control unit, to carry out a method for outputting synchronized light signals as described above. Further aspects of the disclosure are reflected in the dependent claims and the following description.

### Brief Description of the Drawings

Features will become apparent to those of ordinary skill in the art by describing in detail exemplary embodiments with reference to the attached drawings in which:
- Fig. 1: schematically illustrates mobile terminals according to an embodiment;
- Fig. 2: schematically illustrates a method according to an embodiment;
- Fig. 3: schematically illustrates a method according to an embodiment.

### Detailed Description of the Invention

Reference will now be made in detail to embodiments which are illustrated in the drawings. Effects and features of the exemplary embodiments will be described with reference to the accompanying drawings. Therein, like reference numerals denote like elements, and redundant descriptions are omitted. The present disclosure, however, may be embodied in various different forms, and should not be construed as being limited to only the illustrated embodiments herein. Rather, these embodiments are provided solely as examples for fully conveying the aspects and features of the present disclosure to those skilled in the art.

Accordingly, processes, elements, and techniques that are not considered necessary to those having ordinary skill in the art for a complete understanding of the aspects and features of the present disclosure may not be described. At the same time, within the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." Further, in the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items and expressions such as "at least one of" when preceding a list of elements, modify the entire list of elements.

As used herein, term as "substantially", and "about" are used as terms of approximation and not as terms of degree, and are intended to account for the inherent deviations in measured or calculated values that would be recognized by those of ordinary skill in the art. However, if the term "substantially" is used in combination with a feature expressed using a numeric value, the term "substantially" denotes a range of +/- 5% of the value centered on the value.

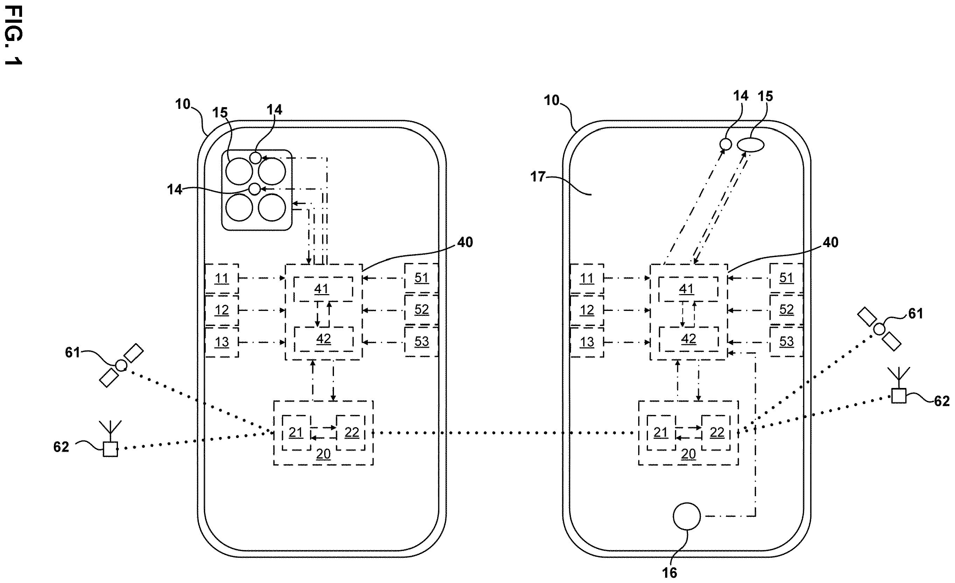

Figure 1 schematically illustrates mobile terminals 10 according to an embodiment, particularly two identical mobile terminals 10 configured for performing the method of the present disclosure. Therein, on the right side of Figure 1, a front view of a mobile terminal 10 is shown and on the left side a rear view of an identical other mobile terminal 10 is shown.

Each of the mobile terminals 10 comprises a plurality of primary sensors, particularly a first sensor 11, a second sensor 12, and a third sensor 13. Therein, the primary sensors 11, 12, 13 are configured for detecting external or environmental signals, i.e., signals related to external influences acting on the mobile terminals. Particularly preferred, the first sensor 11 is a microphone 11, the second sensor 12 is a proximity sensor 12 and the third sensor 13 is an altimeter 13. The mobile terminal 10 also comprise image sensors of at least one camera 15.

Further, the mobile terminals 10 comprise secondary sensors 51, 52, 53, particularly a fourth sensor 51, a fifth sensor 52, and a sixth sensor 53. Therein, the secondary sensors 51, 52, 53 are configured to detect signals regarding the mobile terminals itself, such as motion state related information of the mobile terminals 10. Particularly preferred, the fourth sensor 51 is a tilt sensor 51, the fifth sensor 52 is a gyroscope sensor 52 and the sixth sensor 53 is an acceleration sensor 53. Each of the primary and second sensors 11 to 13, 51 to 53 communicates with a control unit 40 of the mobile terminal 10.

The mobile terminals 10 further comprise a communication module 20, wherein the communication modules each have a memory 21 and one or more transponders 22. Therein, the at least one transponders 22 is configured to transmit and receive signals according to at least one communication protocol. In other words, either a respective transponder 22 is present for each communication protocol or a single transponder 22 is capable of transceiving signals according to multiple communication protocols. Particularly preferred, the at least one transponder is configured as a radio transponder, as a WLAN transponder, as a GPS transponder, as an infrared transponder and as a Bluetooth transponder.

As illustrated in Figure 1, the transponders 22, i.e., the communication module 20 communicate with a GPS satellite 61 and with at least one access point 62, such as a WLAN router, a base station of a mobile communication network, a beacon or the like. Further, the at least one transponder 22 communicates with an internal memory 21 of the communication module 20 via a suitable data bus. Further, each of the communication modules 20 communicates with the control unit 40 of the respective mobile terminal.

The mobile terminals 10 further comprise various light sources. The light sources comprise a display 17 as shown on the right side of Figure 1. Further the light sources comprise multiple camera flash lights, particularly a camera flash light 14 of a front side camera 15 as illustrated on the right side of Figure 1 and two camera flash lights 14 of multiple back side cameras 15 as illustrated on the left side of Figure 1. The light sources are controlled by control unit 40. The display 17 is preferably a touch display 17 and hence also functions as a user interface. Above that, the mobile terminals comprise at least one hardware button 16 for user inputs.

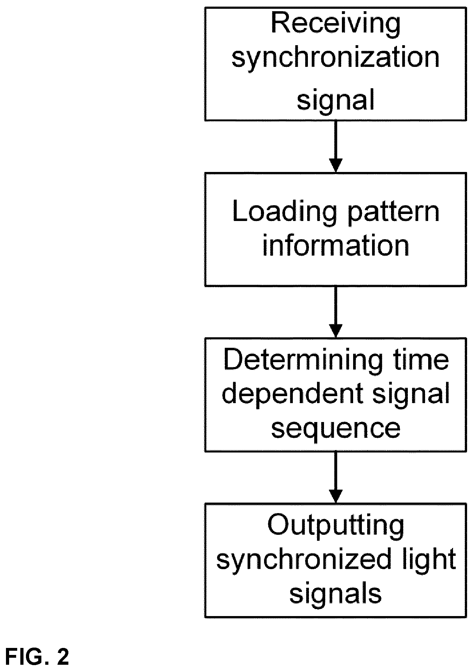

The mobile terminals 10 each further comprise the control unit 40 that is configured for performing the method of the present disclosure. For performing this task and others the control unit 40 comprises an internal memory 41 and a CPU 42 that communicate with each other via a suitable data bus. Above that the control unit 40 communicates at least with the primary sensors 11, 12, 13, secondary sensors 51, 52, 53, communication module 20, camera flashes 14, cameras 15, button 16, and display 17 via suitable data connections. The control units 40 are configured to perform the method as schematically illustrated in Figure 2.

Therein, the method of the present disclosure as schematically illustrated in Figure 2 at comprises at least the steps of receiving, by each of the mobile terminals 10, a synchronization signal configured for aligning a timescale across the mobile terminals; loading, by each of the mobile terminals 10, pattern information setting at least one rule for generating a time dependent signal sequence; determining, by each of the mobile terminals 10, a time dependent signal sequence based on the pattern information and the synchronization signal; and outputting, by the plurality of mobile terminals 10, synchronized light signals based on the time dependent signal sequence, as described in detail above.

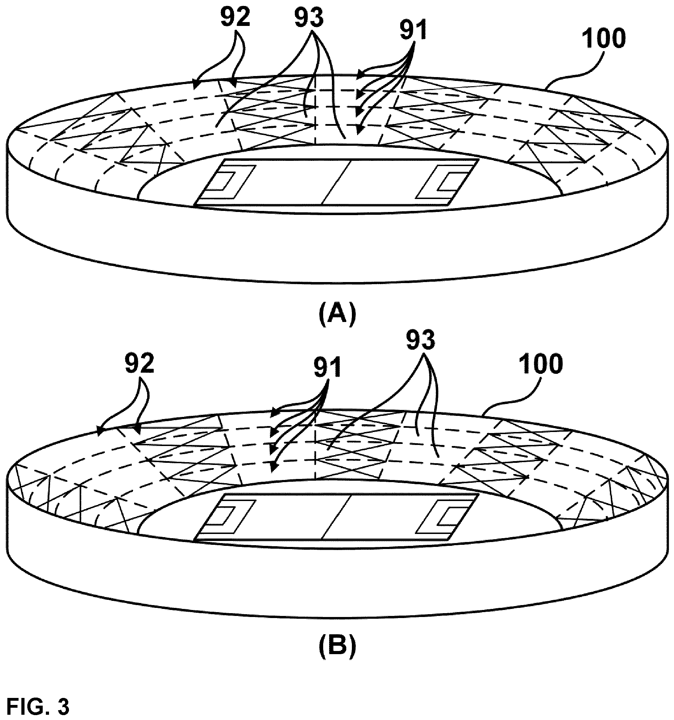

A more illustrative example of an embodiment of the method of the disclosure is shown in Figure 3. Therein, a plurality of users is located within a sport stadium 100 to watch a soccer game. Some of the users have a mobile terminal 10 with them, as described with respect to Figure 1, wherein an application for performing the method of Figure 2 is installed on their mobile terminals 10. On the way into the stadium, the users scan a barcode with the camera 15 of their mobile terminal and, in response thereto, the mobile terminal 10 determines group identification information for the plurality of mobile terminals 10. Particularly, the mobile terminals 10 determined a group ID identifying the grouped plurality of mobile terminals 10.

Based on the group ID, i.e., based on the scanned QR code, the mobile terminals 10 further download pattern information from a server (not shown) via a mobile communication network using the communication module 20 of the respective mobile terminal 10. Also, the mobile terminals 10 determine a synchronization signal to be used based on the determined group identification information. Further, each of the mobile terminals 10 is assigned a group member ID and the group member ID is shared with the server by uplink transmission.

Once, the mobile terminals 10 are registered with the server based on the group ID and the group member ID, a group member position is determined for each of the grouped plurality of mobile terminals 10. In the embodiment of Figure 3, the users are prompted to input their seat number in their mobile terminal 10. The seat number is then transmitted together with the group member ID to the server and the server, based on the seat number and a pre-stored model of the sport stadium 100, the server determines the group member position for the respective group member ID. The group member position hence identifies for each mobile terminal 10 the absolute position within the sport stadium 100 and hence the relative positions with respect to each of the other grouped plurality of mobile terminals 10.

As indicated in Figure 3, the stand 90 of the sport stadium 100 is divided into a plurality of lines 91 and rows 92. Hence, a plurality of sectors 93 is defined that are unambiguously determined by a line number and by a row number. For each of the mobile terminals 10 it is determined in which sector the mobile terminal 10 is located. This determination is carried out in the mobile terminals 10 via said application based on the downloaded pattern information.

Further, based on the pattern information, on the synchronization signal and on the determined sector (i.e., based on the group member position) a time dependent signal sequence is determined by each of the mobile terminals 10. The time dependent signal sequence is preferably determined such that a outputting of synchronized light signals starts at a certain time point, wherein at this time point all mobile terminals 10 located in a sector 93 with an even row number emitted a light signal while all mobile terminals 10 located in a sector 93 with an uneven row number do not emitted a light signal as shown in Figure 3A. Therein, the time point is determined by each of the mobile terminals based on the synchronization signal. Based on the pattern information, after a predetermined time period all mobile terminals 10 located in a sector 93 with an uneven row number emitted a light signal while all mobile terminals 10 located in a sector 93 with an even row number do not emitted a light signal as shown in Figure 3B. In both Figures, the sectors 93 in which the mobile terminals emit a light signal are indicated by a cross. The steps as illustrated with respect to Figures 3A and 3B are repeated a Mexican light wave effect is generated, wherein the light waves seems to circulate through the stadium around the rows 92 of the stand 90. In a preferred embodiment, the light signals output by the mobile terminals 10 are further determined to be a more complex spatial pattern and/or a temporal sequence, e.g., in that the colors of the output light signals further depend on the line number of the mobile terminals 10. Also even more complex effects, such as animations, letterings or logos can be generated.The electronic or electric devices and/or any other relevant devices or components according to embodiments of the present disclosure described herein, except those described explicitly as hardware, may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

A person of skill in the art should recognize that the functionality of various computing devices may be combined or integrated into a single computing device, or the functionality of a particular computing device may be distributed across one or more other computing devices without departing from the scope of the exemplary embodiments of the present disclosure. Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly defined so.

### Reference signs

- 10: mobile terminal
- 11: first sensor (microphone)
- 12: second sensor (proximity sensor)
- 13: third sensor (altimeter)
- 14: (LED) camera flash
- 15: camera (image sensor)
- 16: hardware button
- 17: display
- 20: communication module
- 21: memory
- 22: transponder (Bluetooth, WLAN, 4G/5G, infrared, GPS)
- 40: control unit
- 41: memory
- 42: CPU
- 51: fourth sensor (tilt sensor)
- 52: fifth sensor (gyroscope sensor)
- 53: sixth sensor (acceleration sensor)
- 61: GPS satellite
- 62: access point (base station, router, beacon)
- 90: stands
- 91: lines
- 92: rows
- 93: sectors

## Claims

1. A method for outputting synchronized light signals by a plurality of mobile terminals (10), each mobile terminal (10) comprising at least one light source (14, 17) and a control unit (40) configured to control the at least one light source (14,17), the method comprising the steps of:
receiving, by each of the mobile terminals (10), a synchronization signal configured for aligning a timescale across the mobile terminals (10);
loading, by each of the mobile terminals (10), pattern information setting at least one rule for generating a time dependent signal sequence;
determining, by each of the mobile terminals (10), a time dependent signal sequence based on the pattern information and the synchronization signal; and
outputting, by the plurality of mobile terminals (10), synchronized light signals based on the time dependent signal sequence.

2. The method of claim 1, wherein the pattern information sets at least one rule for generating a time dependent signal sequence based on detected sensor data, and wherein the time dependent signal sequence is determined based on the pattern information, sensor data detected by at least one terminal (10) and the synchronization signal.

3. The method of claim 2, wherein the detected sensor data relates to an acoustic signal, an optical signal or a motion of at least one terminal (10) and wherein the pattern information sets at least one rule for generating a signal sequence based on the acoustic signal, the optical signal or the motion of the at least one terminal (10).

4. Method according to any of the preceding claims, wherein the pattern information is prestored in a memory (41) of at least one of the mobile terminals (10) with respect to an application.

5. Method according to any of the preceding claims, wherein the pattern information is loaded via a network by at least one of the mobile terminals (10) based on identification information detected by the at least one of the mobile terminals (10) and/or wherein the pattern information is received by at least one of the mobile terminals (10) via a message transmitted from at least one mobile terminal (10), a server, a beacon or a central controller (62).

6. Method according to any of the preceding claims, wherein the synchronization signal is a synchronization signal of a mobile communication network, a timing signal of a GPS system and/or a synchronized light signal transmitted by at least one other mobile terminal (10).

7. Method according to claim 6, wherein at least one of a starting time point and an alignment time point for the synchronized light signals is determined based on synchronization signal.

8. Method according to any one of the preceding claims, further comprising the steps of:
grouping the plurality of mobile terminals (10) based on a user input, a location, an access point ID, detected identification information or a proximity below a predetermined threshold,
determining group identification information for the grouped plurality of mobile terminals (10), and
receiving the synchronization signal and/or loading the pattern information corresponding to the group identification information.

9. Method according to claim 8, wherein the group identification information comprises a group ID identifying the grouped plurality of mobile terminals (10) and/or a group member ID and a group member position for each of the grouped plurality of mobile terminals (10), the group member position identifying a relative position of each of the grouped plurality of mobile terminals (10) with respect to the other terminals of the grouped plurality of mobile terminals (10).

10. Method according to claim 9, wherein the group member position is determined
based on geographic position information determined by each of the grouped plurality of mobile terminals (10) via at least one of A-GPS, WLAN triangulation or beam sweeping,
via light-based communication between the mobile terminals (10) of the grouped plurality of mobile terminals (10),
based on a user input associated with a position of the user in a surrounding structure, and/or
based on at least one image of a surrounding structure obtained by each of the plurality of grouped mobile terminals (10).

11. Method according to claim 9 or 10, wherein the time dependent signal sequence is based on the pattern information, on the synchronization signal and on the group member ID and/or the group member position, and wherein, by each of the mobile terminals (10), the synchronized light signals outputted by the plurality of grouped terminals (10) form a spatial pattern and/or a temporal sequence of light signals.

12. Mobile terminal (10), comprising:
at least one light source (14, 17) configured to output a visible light signal; and
a control unit (40) configured for controlling the at least one light source (14, 17) and for performing the method according to any one of the preceding claims.

13. Mobile terminal (10) according to claim 11, further comprising at least one sensor (11, 12, 13, 15, 51, 52, 53) configured for detecting sensor data under the control of the control unit (40) and configured for transmitting the detected sensor data to the control unit (40), wherein the at least one sensor of the mobile terminal (10) comprises an image sensor (15), an acceleration sensor (53), a gyroscope sensor (52) and/or a microphone (11).

14. Mobile terminal (10) according to any one of claims 11 to 13, further comprising a communication module (20) configured for transmitting and receiving messages and connected to at least one transponder (22) and/or connected to a the at least one light source (14, 17) and to an image sensor (15) of the mobile terminal (10).

15. A computer program comprising instructions which, when the program is executed by a control unit (40) of a mobile terminal (10) cause the control unit (40) to control the mobile terminal (10) to carry out the method of any one of the claims 1 to 10.
